# EUROPEAN PATENT APPLICATION

(11) **EP 2 051 416 A1**
(43) Date of publication of application: **22.04.2009**
(21) Application number: 07020163.7
(22) Date of filing: 15.10.2007
(51) Int. Cl.: H04B 10/18, H04B 10/155

(54) **Electronic dispersion precompensation for a directly modulated laser**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

Fiber optic transmission system for enhancing the maximum reach of a transmission signal
**characterized in that**
a direct modulated laser (DML) managed by at least one control factor is provided and the control factor is adapted to characteristics of a transmission network.

## Description

### 1. Which technical problem or which problem that can be solved with technical means is the basis for the invention?

In optical transmission fibre systems the transmitted modulated signal gets distorted due to the chromatic dispersion. That means the received signal can not be detected error free. By using a directly modulated laser the chromatic dispersion reduces the maximum transmission length to about 20 km, depending on the laser characteristics. Especially at 1550 nm with a standard single mode fibre (SSMF) is that one of the main limiting effects of the transmission system.

### 2. How has this problem been solved up to now?

There are three possibilities to overcome the transmission limit of the chromatic dispersion.
The most common way to mitigate this effect is to use dispersion compensating fibres (DCF) together with the normal transmission fibre. This fibre has a negative chromatic dispersion such the positive chromatic dispersion of the SSMF and the negative dispersion of the DCF eliminate the signal degradation. Combined with the DCF additionally optical amplifiers have to be used due to the extra signal attenuation. This approach is applicable for system using a directly modulated laser or vector modulators.

The dispersion supported transmission (DST) [Wedding2005] is an approach that overcomes the dispersion limit without inline compensation (i.e. DCF) for directly modulated laser systems. For some optical signals, generated by a directly modulated laser, the dispersion can be considered as a first approximation as a simple high pass. Therefore an electrical low pass filter at the receiver inverts the transmission system and mitigates the effect of the chromatic dispersion. To generate the desired signal (that behaves like a high pass) the bias current and the extinction ratio of the laser signal have to be adjusted to the transmission length. Additionally the bandwidth of the electrical low pass filter at the receiver has to be adjusted for every transmission length. The maximum transmission distance published is about 250 km at 10 Gbit/s. (patent-registered)

The chirp managed laser (CML) ([Mahgerefteh2005]) uses a directly modulated laser in conjunction with an optical filter. The laser output signal will be filtered to obtain a signal at the receiver that behaves similar like the doubinary modulation format. Therefore the maximum transmission distance without inline compensation of the chromatic dispersion is about 250 km (patent-registered [CMLpatent, CMLpatent2])

A relative new approach to compensate the dispersion that is similar to the here described approach is the electrical precompensation of the chromatic dispersion using a predistorted signal and a vector modulator (i.e. an external modulator). [Killey2005, McNico12004]. There, a desired target format at the receiver will be backwards propagated to obtain a predistorted optical signal at the transmitter that can only be modulated with vector modulator. With this approach no DCFs have to be used and therefore less optical amplifier will be needed.

### 3. By which technical features of the invention is the problem named under point 1 solved?

Electronic predistortion for a directly modulated laser means, that the optical signal will be predistorted at the transmitter such the received signal after transmission will have a very low bit error ratio (BER). (In contrast, the predistorted technique for optical fibre systems using vector modulators (i.e. external modulators) calculates the predistorted for a special given target signal.)

Using a directly modulated laser as a transmitter has two drawbacks related to generate a predistorted signal. Only the optical intensity can be modulated by the laser current. The optical phase depends on the optical intensity and will therefore be modulated also by the laser current. That means it is not possible to generate an optical signal with an arbitrary intensity and phase. The nonlinear behaviour and the restricted bandwidth of the directly modulated laser restrict the laser output thus not every signal waveform can be achieved. Due to these constraints of the signal that can be modulated by a directly modulated laser an easy backwards calculation of the chromatic dispersion (as it was done in [Killey2005, McNicol2004]) is not possibly.

Using a direct detection receiver the phase information of the signal is not considered. That means the lost of a degree of freedom at the transmitter can be compensated by obtaining a degree of freedom at the receiver. To generate a laser modulation current, which results in an optical predistorted signal, an artificial neural network will be used. The optimization of the artificial neural network is done by the particle swarm algorithm (but can also be done by any other algorithm like evolutionary algorithms).

With the help of a computer simulation environment or with a conjunction of a PC and a real laboratory optical transmission system the neural network will be trained to achieve the lowest possible BER for a given transmission length at the receiver.

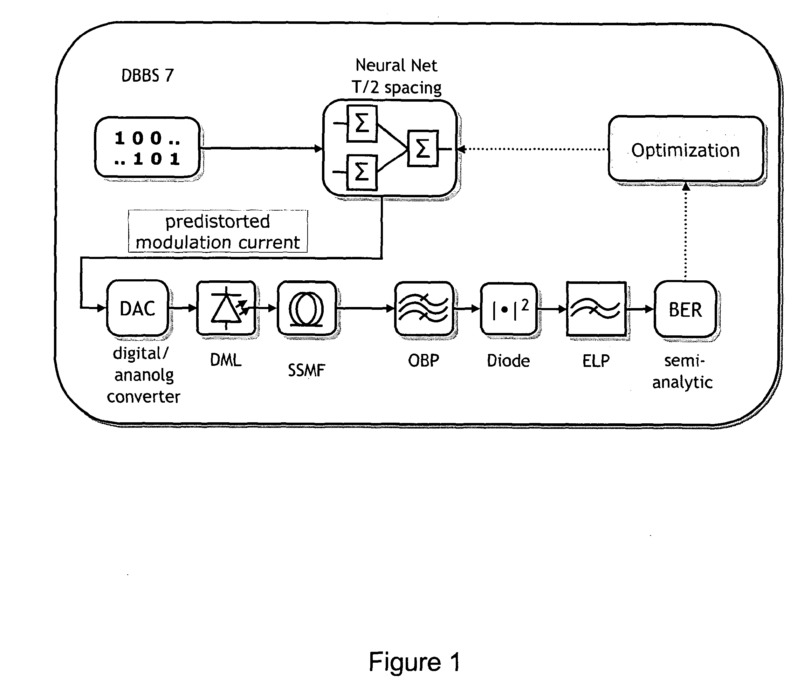

The optical transmission system that will be used in the simulations is shown in figure 1. The system consists of a directly modulated laser, an optical fibre, an optical band pass, a photodiode and an electrical low pass.

The used network is a multilayer perceptron neural network and consist of three layers: input layer, one hidden layer and an output layer. The activation function of the network is a sigmoid function. Depending on the transmission distance, two to five neurons are used in the hidden layer. The inputs of the neural network are time shifted samples of a signal that contains the data information. The number of the neural network inputs (i.e. the neural network memory length) depends on the transmission distance as well.

To optimize the artificial neural network the particle swarm algorithm is used. A number of coefficient sets, called a population, is randomly initialised. For each coefficient set the predistorted laser modulation current is generated and afterwards used to transmit a de Bruijn bit sequence. At the receiver the BER will be calculated. At every iteration step every coefficient sets moves towards the position of the so far lowest detected BER of all sets and the position where it detected the lowest BER in the history of itself. With "position" the coefficients of a special set are meant (in an n-dimensional space). There several variation of this algorithm where the direction of the movement for the next iteration step differs from the one described above.
Other possible algorithms to optimize the coefficients are:
*Evolutionary Algorithm:* Starting also with randomly initialized population, new coefficient sets are gained, comparable with the biological process of evolution. The new sets for next iteration step are generates in a process of mutation, recombination und selection.
*Differential Evolution:* Similar to the evolutionary algorithm but with a mutation process, that is defined by a difference vector of arbitrary chosen coefficient sets. This results generally in better convergence of the algorithm
*Hybrid Algorithm (with pattern search):* Using one of the previously named algorithms to find an area with some good results (related to the BER), the pattern search may specify the solution in a second optimization step. The pattern search algorithm takes the so far best coefficient set and moves the set consecutively always in one direction to find the direction where the BER improves. Finding the first direction where the BER improves, the special coefficient of the set will be changed. Afterwards, again the direction where the BER becomes better will be searched by varying only one parameter of the set.

After the algorithms terminate the coefficients for the neural network, which results in the best BER for the specified system parameter (e.g. transmission length, chirp factor of the laser, optical and electrical filter ...), are obtained.
The neural network with the optimized coefficients can than be used to generate a predistorted laser modulation current for any bit sequence and the specified transmission system. Alternatively filter structures that can be used to generate the predistorted laser modulation current and therefore substitute the neural network are:
*Look-up-table:* that is a multiplexer with 2ⁿ inputs and 1 or more outputs. Any binary encoded input (like a data stream) results in a special output to modulate a signal
*Nonlinear FIR filter (finite impulse response)*: that is a filter with a response to an impulse that ultimately settles to zero. The filter characteristic have to be nonlinear
*Nonlinear FIR filter (finite impulse response):* that is a filter with a response to an impulse that is non-zero over infinite time duration. The filter characteristic have to be nonlinear
*Volterra Filter:* that is nonlinear FIR filter, based on the Volterra Series, which can generate arbitrary signals.

In that case the filter structures have to be adapted to the previously optimized neural net, such that the filter structures generate the same signal as the neural network.

### 4. In what does the invention step lie and what advantages arise from the technical features according to the invention specified under Point 3?

The main invention is to use the neural network and a proper algorithm (i.e. Particle Swarm) to obtain a predistorted signal to mitigate the chromatic dispersion. Another aspect of the invention is that not a target format will be backward propagated to calculate the predistorted signal (as in [Killey2005, McNicol2004]). Instead, the optimization system will find that modulation current for the laser (called predistorted modulation current) that results in the lowest BER at the receiver. Only this makes it possible to deal with the nonlinear behaviour of the laser diode and the lost of a degree of freedom at the laser diode.

The advantage of this invention is to save DCFs and additionally optical amplifier in the transmission system. Compared with the DST or the CML, the maximum transmission distance is much higher (So far 350 km SSMF instead of 250 km SSMF (DST, CML), but theoretically for any distance the signal could be predistorted.). Also, this approach seams to be cheaper than the CML and more applicable than the DST.

## Claims

1. Fiber optic transmission system for enhancing the maximum reach of a transmission signal
**characterized in that**
a direct modulated laser (DML) managed by at least one control factor is provided and the control factor is adapted to characteristics of a transmission network.

2. Fiber optic transmission system according to claim 1,
**characterized in that**
the direct modulated laser (DML) is managed by a neural network.

3. Fiber optic transmission system according to claim 1,
**characterized in that**
the direct modulated laser (DML) is managed by a look up table.

4. Fiber optic transmission system according to claim 1,
**characterized in that**
the direct modulated laser (DML) is managed by a non-linear filter.

5. Fiber optic transmission system according to claim 1,
**characterized in that**
the direct modulated laser (DML) is managed by a Volterra Filter.

6. Method for enhancing the maximum reach of a transmission signal in a fiber optic transmission system
**characterized in that**
the direct modulated laser (DML) is managed by at least one control factor and the control factor is adapted to characteristics of a transmission network.

7. Method according to claim 6,
**characterized in that**
the direct modulated laser (DML) is managed by a neural network.

8. Method according to claim 7,
**characterized in that**
the neural network is a multi-layer perceptron feed-forward network.

9. Method according to claim 7,
**characterized in that**
the activation function of the neural network is a sigmoid function.

10. Method according to claim 7,
**characterized in that**
the neural network consists of at least 3 layers (input layer, hidden layer, output layer)

11. Method according to claim 7,
**characterized in that**
the neural network generates a control signal that is adapted to the length of the transmission network.

12. Method according to claim 11,
**characterized in that**
the generated control signal for the direct modulated laser (DML) is optimized in such a way that the receiving signal shows a minimal bit error rate.

13. Method according to claim 12,
**characterized in that**
the neural network is optimized by a Particle Swarm Algorithm and / or a Evolutionary Algorithm and / or a Differential Evolution Algorithm and / or a Pattern Search Algorithm.

14. Method according to claim 12,
**characterized in that**
a neural network is used to generate a look up table, and the look up table is used to create the modulation current for the direct modulated laser (DML).

15. Method according to claim 12,
**characterized in that**
the neural network is used to determine a FIR - filter structure to generate the modulation current for the direct modulated laser (DML).

16. Method according to claim 15,
**characterized in that**
the FIR - filter structure is a Volterra Filter.

17. Method according to claim 19,
**characterized in that**
the FIR - filter structure is a non linear filter.
